# EUROPEAN PATENT SPECIFICATION

(11) **EP 4 261 962 B1**
(45) Date of publication and mention of the grant of the patent: **21.10.2026**
(21) Application number: 20964504.3
(22) Date of filing: 08.12.2020
(51) Int. Cl.: H01M 8/1004, H01M 8/10

(54) **METHOD FOR MANUFACTURING MEMBRANE ELECTRODE**
VERFAHREN ZUR HERSTELLUNG EINER MEMBRANELEKTRODE
PROCÉDÉ DE FABRICATION D'ÉLECTRODE À MEMBRANE

(43) Date of publication of application: 18.10.2023
(73) Proprietor: Wuxi Lead Intelligent Equipment Co., Ltd., Wuxi, Jiangsu 214028 (CN)
(72) Inventor: SHAO, Meng, Wuxi, Jiangsu 214028 (CN)
(74) Representative: Rau, Schneck & Hübner Patentanwälte Rechtsanwälte PartGmbB
(86) International application number: PCT/CN2020/134449
(87) International publication number: WO 2022/120557

(56) References cited:
- EP-A2- 1 804 325
- CN-A- 1 992 400
- CN-A- 101 393 989
- CN-A- 104 617 310
- CN-A- 110 323 474
- CN-A- 110 611 113
- CN-A- 111 477 888
- CN-A- 112 825 360
- CN-B- 101 393 989

## Description

### TECHNICAL FIELD

The disclosure relates to the technical field of fuel cells, in particular to a method for manufacturing a membrane electrode.

### BACKGROUND

Membrane electrode (MEA, Membrane Electrode Assemblies) is composed of CCM (Catalyst Coated Membrane), cathode and anode frame, cathode and anode GDL (gas diffusion layer).

A traditional manufacturing method adopts the production process of combined sheets, that is, to make the CCM, frame and GDL into sheets by sheet-making technology, and then assemble the frame and CCM into a combined sheet by flat laminating, and then bond the cathode GDL and anode GDL respectively on opposite sides of the combined sheet, thereby obtaining an end product of the membrane electrode. However, the production process of combining sheets is low in production efficiency, and cannot meet the production capacity demand.

CN101393989B discloses a method for preparing a membrane electrode with a sealed frame for use in ion exchange membrane fuel cells. The method involves laminating an ion exchange membrane with a protective film to a sealing frame material that includes a substrate and a sticky adhesive layer. After removing the protective film, another sealing frame material is symmetrically laminated on the opposite side of the ion exchange membrane. The substrates are then removed to reveal a core component with catalyst-coated membranes (CCM) on both sides, which is subsequently hot-pressed with gas diffusion layers to form the final membrane electrode.

EP1804325A2 describes a continuous process for applying sub gaskets to CCM assemblies. The process involves hot lamination of subgasket rolls to a CCM roll, ensuring precise alignment and secure bonding. This method enhances the durability and performance of the CCM assemblies, making them suitable for use in electrochemical devices.

### SUMMARY

Based on this, it is necessary to provide a method for manufacturing a membrane electrode that addresses the above-mentioned defects in view of the prior art problem of low production efficiency and unmet production capacity demand due to production of the membrane electrode by combined sheets.

A method for manufacturing a membrane electrode, including:
unwinding and outputting a first frame strip passing through the first laminating station; the first frame strip including a first bottom supporting membrane layer and a first frame layer stacked on the first bottom supporting membrane layer, one side of the first frame layer away from the first bottom supporting membrane layer being coated with a first bonding adhesive layer, and the first frame layer having a plurality of first active regions sequentially arranged at intervals along the length direction of the first frame strip;
unwinding and outputting a CCM strip passing through the first laminating station, the CCM strip including a backing membrane and a plurality of CCM units stacked on the backing membrane, the plurality of CCM units being sequentially arranged at intervals along the length direction of the CCM strip;
at the first laminating station, heating the first frame strip; and
at the first laminating station, laminating the CCM strip and the first frame strip to form the first combined strip, where the CCM units are bonded one by one via a first bonding adhesive layer on the first active regions of the first frame layer, and are separated from the backing membrane;
wherein the step "at the first laminating station, laminating the CCM strip and the first frame strip to form the first combined strip" specifically includes:
the backing membrane of the CCM strip winding through a pinch roller set, and the pinch roller set pulling the CCM strip to move until the CCM units are aligned with the first active region of the first frame strip;
the pinch roller set pressing the CCM strip and the first frame strip against a heating platform; and
the pinch roller set returning along the heating platform to bond the CCM units on the first active region, and at the same time, the CCM units being separated from the backing membrane;
wherein, after the step "at the first laminating station, laminating the CCM strip and the first frame strip to form the first combined strip", the embodiment further includes:
unwinding and outputting a second frame strip passing through the second laminating station downstream of the first laminating station; the second frame strip including a second bottom supporting membrane layer and a second frame layer stacked on the second bottom supporting membrane layer, one side of the second frame layer away from the second bottom supporting membrane layer being coated with a second bonding adhesive layer, and the second frame layer having a plurality of second active regions sequentially arranged at intervals along the length direction of the second frame strip;
at the second laminating station, positioning the second frame strip and the first combined strip, so that the second active regions on the second frame strip are aligned with the CCM units on the first combined strip;
at the second laminating station, point-heating and combining a second bonding adhesive layer of the second frame strip, to form a second combined strip;
wherein, after the step "at the second laminating station (a8), point-heating and combining a second bonding adhesive layer of the second frame strip (8), to form a second combined strip (9)", the embodiment further includes: at the cutting station downstream of the second laminating station (a8), cutting the second frame strip (8) of the second combined strip (9), so as to form a first gap (f) between two adjacent active regions of the second frame strip (8), and removing the waste formed in the first gap (f) due to cutting.

In an embodiment of the present disclosure, the first frame strip is provided with a first positioning hole, and the second frame strip is provided with a second positioning hole;
the step "at the second laminating station, positioning the second frame strip and the first combined strip, so that the second active regions on the second frame strip are aligned with the CCM units on the first combined strip" includes:
at the second laminating station, inserting positioning pins correspondingly into the first positioning hole a and the second positioning hole.
In an embodiment of the present disclosure, after the step "removing the waste formed in the first gap due to cutting", the embodiment further includes:
removing the second bottom supporting membrane layer of the second frame strip, and removing the first bottom supporting membrane layer of the first frame strip.

In an embodiment of the present disclosure, after the step "removing the second bottom supporting membrane layer of the second frame strip, and removing the first bottom supporting membrane layer of the first frame strip", the embodiment further includes:
at a heat-laminating station downstream of the cutting station, heat-laminating the second combined strip to activate the first bonding adhesive layer and the second bonding adhesive layer.

In an embodiment of the present disclosure, after the step "at a heat-laminating station downstream of the cutting station, heat-laminating the second combined strip to activate the first bonding adhesive layer and the second bonding adhesive layer", the embodiment further includes:
at the patching station downstream of the heat-laminating station, bonding the GDL patches on two opposite sides of the second combined strip, and covering regions corresponding to the CCM unit with the GDL patches; and
at a cutting-off station downstream of the patching station, cutting off the second combined strip along positions between two adjacent CCM units, to form a MEA product.

In an embodiment of the present disclosure, before the step of "unwinding and outputting a first frame strip passing through the first laminating station", the embodiment further includes:
unwinding and outputting the first frame raw strip passing through the third laminating station; wherein the first frame raw strip includes a first frame layer and a first release layer, the first release layer being stacked on one side of the first frame layer having the first bonding adhesive layer;
unwinding and outputting the first bottom supporting raw strip passing through the third laminating station, wherein the first bottom supporting raw strip includes a first bottom supporting membrane layer and a first protective membrane layer stacked on one side of the first bottom supporting membrane layer, the one side of the first bottom supporting membrane layer facing the first protective membrane layer having a first adhesive;
at the third laminating station or upstream thereof, peeling off the first protective membrane layer and the first release layer; and
at the third laminating station, laminating the first frame layer and the first bottom supporting membrane layer to form the first frame strip; the first bottom supporting membrane layer being attached to one side of the first frame layer away from the first bonding adhesive layer via the first adhesive.

In an embodiment of the disclosure, after the step "at the third laminating station, laminating the first frame layer and the first bottom supporting membrane layer to form the first frame strip", the embodiment further includes:
the first frame strip passing through an electrostatic generator, so that the regions without the first adhesive between the first frame layer and the first bottom supporting membrane layer are electrostatically adsorbed to each other.

In an embodiment of the present disclosure, after the step "the first frame strip passing through an electrostatic generator, so that the regions without the first adhesive between the first frame layer and the first bottom supporting membrane layer are electrostatically adsorbed to each other", the embodiment further includes:
at the first processing station located downstream of the third laminating station, process the first positioning hole a on the first frame strip;
at the second processing station located downstream of the first processing station, using the first positioning hole to position the first frame strip, and cutting the first frame layer to hollow it out, so as to form the above-mentioned first active region in the hollowed-out region; and
removing the waste formed in the first active region due to cutting, and winding the first frame strip for use in subsequent processes.

In an embodiment of the present disclosure, before the step "unwinding and outputting a second frame strip passing through the second laminating station", the embodiment further includes:
unwinding and outputting a second frame raw strip passing through a fourth laminating station, wherein the second frame raw strip includes a second frame layer and a second release layer, the second release layer being stacked on one side of the second frame layer with the second bonding adhesive layer;
unwinding and outputting a second bottom supporting raw strip passing through the fourth laminating station, wherein the second bottom supporting raw strip includes a second bottom supporting membrane layer and a second protective membrane layer stacked on one side of the second bottom supporting membrane layer having the second adhesive;
at the fourth laminating station or upstream thereof, peeling off the first protective membrane layer and the first release layer; and
at the fourth laminating station, laminating the second frame layer and the second bottom supporting membrane layer to form the second frame strip, wherein the second bottom supporting membrane layer is attached to one side of the second frame layer away from the second bonding adhesive layer via the second adhesive.

In an embodiment of the present disclosure, after the step "at the fourth laminating station, laminating the second frame layer and the second bottom supporting membrane layer to form the second frame strip", the embodiment further includes:
the second frame strip passing through the electrostatic generator, so that the regions without the second adhesive between the second frame layer and the second bottom supporting membrane layer are electrostatically adsorbed to each other.

In an embodiment of the present disclosure, after the step "the second frame strip passing through the electrostatic generator, so that the regions without the second adhesive between the second frame layer and the second bottom supporting membrane layer are electrostatically adsorbed to each other", the embodiment further includes:
at the third processing station located downstream of the fourth laminating station, process the second positioning hole on the second frame strip;
at the fourth processing station located downstream of the third processing station, use the second positioning hole to position the second frame strip, and cut the second frame layer to hollow it out, so as to form the above-mentioned second active region in the hollowed-out region; and
removing the waste formed in the second active region due to cutting, and winding the second frame strip.

In an embodiment of the present disclosure, before the step "unwinding and outputting a CCM strip 5 passing through the first laminating station", the embodiment further includes:
unwinding and outputting the pre-processed CCM strip passing through the cutting station, wherein the pre-processed CCM strip includes the backing membrane and a CCM layer stacked on one side of the backing membrane; and
at the cutting station, cutting the CCM layer into a plurality of CCM units to form a CCM strip.

In an embodiment of the present disclosure, before the step "unwinding and outputting the pre-processed CCM strip passing through the cutting station", the embodiment further includes:
unwinding and outputting a CCM raw strip passing through a slitting station; and
at the slitting station, slitting the CCM raw strip along its width direction to form a pre-processed CCM strip with a preset width, and winding the pre-processed CCM strip.

In the above method of manufacturing a membrane electrode, the first bonding adhesive layer on the first frame strip is activated by heating and laminating the first frame strip and the CCM strip that are unwound and outputted to the first laminating station; in addition, the CCM units of the CCM strip are bonded one by one on the first active region of the first frame layer during laminating, and are separated from the backing membrane, that is to realize transferring of the CCM units of the CCM strip to the first active region of the first frame layer. Comparing with the prior art where the CCM strip and the frame strip are made into sheets and flat-laminated for combining, the present disclosure adopts a roll-to-roll method to realize the transfer of CCM units to the first active region of the first frame layer, thereby facilitating improvement of production efficiency and commendably satisfying capacity demands.

### BRIEF DESCRIPTION OF THE DRAWINGS

Fig. 1 is a schematic illustration of a method for manufacturing membrane electrode in an embodiment of the present disclosure;
Fig. 2 is a flowchart of the method for manufacturing membrane electrode as shown in Fig. 1;
Fig.3 is a schematic illustration of laminating a CCM strip and a first frame strip to form a first combined strip in the method for manufacturing the membrane electrode as shown in FIG. 2;
Fig. 4 is a cross-sectional view along the A-A direction of the first combined strip as shown in Fig. 3;
Fig. 5 is a flowchart of laminating the CCM strip and the first frame strip in the method for manufacturing the membrane electrode as shown in Fig. 3;
Fig. 6 is a flowchart of a processing method for the second combined strip in the method for manufacturing the membrane electrode as shown in Fig. 1;
Fig. 7 is a schematic illustration of electrically heating and combining the second frame strip and the first combined strip to form a second combined strip as shown in Fig. 2;
Fig. 8 is a top view of the second combined strip shown in Fig. 7;
Fig. 9 is a cross-sectional view along the B-B direction of the second combined strip shown in Fig. 8;
Fig. 10 is a schematic illustration of the second combined strip in the method for manufacturing the membrane electrode as shown in Fig. 6, with the first bottom supporting membrane layer and the second bottom supporting membrane layer removed;
Fig. 11 is a cross-sectional view along the C-C direction of the second combined strip as shown in Fig. 10, with the first bottom supporting membrane layer and the second bottom supporting membrane layer removed;
Fig. 12 is a flow chart of the pre-processing method of the first frame raw strip in the method for manufacturing the membrane electrode as shown in Fig. 1;
Fig. 13 is a schematic illustration of the pre-processing method of the first frame raw strip as shown in Fig. 12;
Fig. 14 to Fig. 19 are evolutional process views of the cross-section of the first frame raw strip during the pre-processing process of the first frame raw strip as shown in Fig. 12;
Fig. 20 is a flow chart of the pre-processing method of the second frame raw strip in the method for manufacturing the membrane electrode as shown in Fig. 1;
Fig. 21 is a flow chart of the pre-processing method of the CCM raw strip in the method for manufacturing the membrane electrode as shown in Fig. 1;
Fig. 22 is a schematic illustration of slitting in the pre-processing method of the CCM raw strip as shown in Fig. 21;
Fig.23 is a cross-sectional structural illustration of the CCM raw strip as shown in Fig. 22 after slitting;
Fig. 24 is a flow chart of the pre-processing method of the GDL raw strip in the method for manufacturing the membrane electrode shown in Fig. 1;
Fig. 25 is a schematic illustration of the pre-processing method of the GDL raw strip as shown in Fig. 24;
Fig. 26 is an evolutional process view of the structure in the pre-processing method of the GDL raw strip as shown in FIG. 24.

### DETAILED DESCRIPTION

In order to enable easy understanding of the above objects, features and advantages of the present disclosure, specific implementations of the present disclosure will be described in detail below in conjunction with the accompanying drawings. In the following description, numerous specific details are set forth in order to provide a thorough understanding of the present disclosure. These embodiments are illustrative and do not limit the scope of the disclosure. The scope of the present disclosure is defined by the appended claims, and any equivalent substitutions or improvements falling within the scope of the claims are also protected by the present disclosure.

In describing the present disclosure, it should be understood that the terms "center", "longitudinal", "transverse", "length", "width", "thickness", "upper", "lower", "front", " Back", "Left", "Right", "Vertical", "Horizontal", "Top", "Bottom", "Inner", "Outer", "Clockwise", "Counterclockwise", "Axial", "radial", "circumferential" and other indicated orientations or positional relationships are based on the orientations or positional relationships shown in the drawings, which are only for the convenience of describing the present disclosure and simplifying the description, rather than indicating or implying the referred device or elements must have certain orientations or must be constructed and operate in certain orientations, and therefore should not be construed as limitations on the disclosure.

In addition, the terms "first" and "second" are used for descriptive purposes only, and cannot be interpreted as indicating or implying relative importance or implicitly specifying the quantity of indicated technical features. Thus, the features defined as "first" and "second" may explicitly or implicitly include at least one of these features. In the description of the present disclosure, "plurality" means at least two, such as two, three, etc., unless specifically defined otherwise.

In the present disclosure, unless otherwise clearly specified and defined, terms such as "installation", "connection", "connection" and "fixation" should be understood in a broad sense, for example, it can be a fixed connection or a detachable connection, or integrated; it may be mechanically connected or electrically connected; it may be directly connected or indirectly connected through an intermediary, and it may be the internal communication of two components or the interaction relationship between two components, unless otherwise specified limit. Those of ordinary skill in the art can understand the specific meanings of the above terms in the present disclosure according to specific situations.

In the present disclosure, when referring to a first feature "on" or "under" a second feature, unless otherwise clearly specified and defined, the first feature may be in direct contact with the second feature or the first and second feature may be in indirect contact through intermediary media. Moreover, "above", "over" and "on" the first feature on the second feature may mean that the first feature is directly above or obliquely above the second feature, or simply means that the first feature is higher in level than the second feature. "Below", "beneath" and "under" the first feature may mean that the first feature is directly below or obliquely below the second feature, or simply means that the first feature is horizontally lower than the second feature.

It is to be noted that when an element is referred to as being "fixed on" or "disposed on" another element, it may be directly on the other element or there may be an intervening element. When an element is referred to as being "connected to" another element, it can be directly connected to the other element or intervening elements may also be present. As used herein, the terms "vertical", "horizontal", "upper", "lower", "left", "right" and similar expressions are for the purpose of illustration only and are not intended to represent the only embodiment.

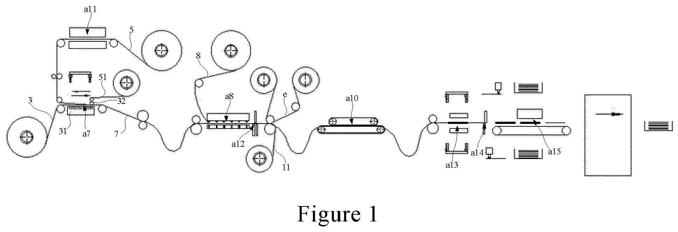

Referring to Fig. 1, Fig. 2 and Fig. 3, a method for manufacturing a membrane electrode provided by an embodiment of the present disclosure includes the following steps:

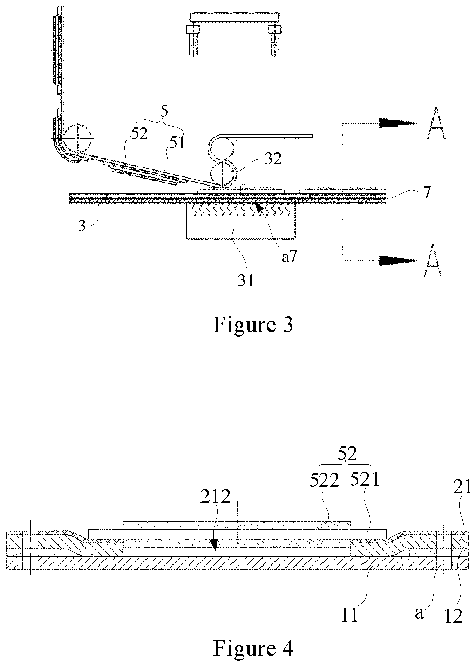

S10, unwinding and outputting a first frame strip 3 passing through a first laminating station a7. Please also refer to FIG. 4, wherein the first frame strip 3 includes a first bottom supporting membrane layer 11 and a first frame layer 21 stacked on the first bottom supporting membrane layer 11. The side of the first frame layer 21 away from the first bottom supporting membrane layer 11 is coated with a first bonding adhesive layer, and the first frame layer 21 has a plurality of first active regions 212, and the plurality of first active regions 212 are arranged sequentially along the length direction of the first frame strip 3 at intervals. Optionally, the first bonding adhesive layer may be hot melt adhesive.

Furthermore, the first bonding adhesive layer is located on one side of the first frame layer 21 away from the first bottom supporting membrane layer 11, and can be coated in a way of covering the entire surface. A plurality of first active regions 212 are located in the middle of the first frame layer 21 and arranged at intervals along the length direction of the first frame strip 3.

S20, unwinding and outputting a CCM strip 5 passing through the first laminating station a7. Please also refer to FIG. 3, wherein the CCM strip 5 includes a backing membrane 51 and a plurality of CCM units 52 stacked on the backing membrane 51, and the plurality of CCM units 52 are arranged at intervals along the length direction of the CCM strip 5. Further, the CCM units 52 includes a PEM membrane 521 (i.e., a proton exchange membrane) coated with catalytic layers 522 on two opposite sides of the PEM membrane (see Fig. 4).

S30, at the first laminating station a7, heating the first frame strip 3. In this way, by heating the first frame strip 3, the first bonding adhesive layer of the first frame strip 3 passing through the first laminating station a7 is activated. Specifically, a heating platform 31 is used for heating the first frame strip 3.

S40, at the first laminating station a7, laminating the CCM strip 5 and the first frame strip 3, to form the first combined strip 7. Here, the CCM units 52 are attached to the first active region 212 of the first frame layer 21 one by one through the first bonding adhesive layer activated by heating, and are separated from the backing membrane 51.

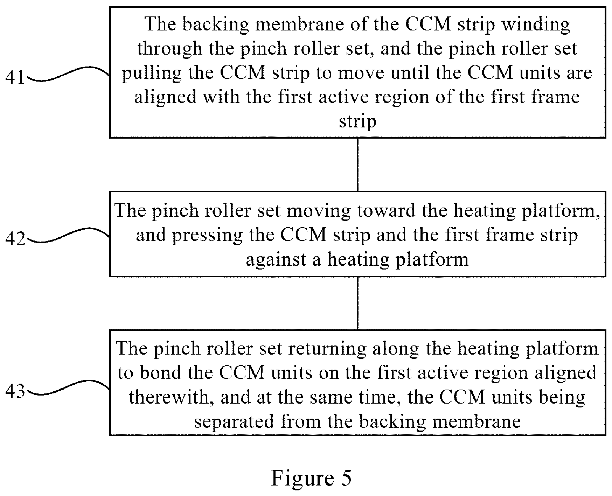

Please also refer to Fig. 5, further, step S40 specifically includes the following steps:

S41, the backing membrane 51 of the CCM strip 5 winding through the pinch roller set 32, and the pinch roller set 32 pulling the CCM strip 5 to move until the CCM units 52 are aligned with the first active region 212 of the first frame strip 3.

S42, the pinch roller set 32 moving toward the heating platform 31, and pressing the CCM strip 5 and the first frame strip 3 against the heating platform 31.

S43, the pinch roller set 32 returning along the heating platform 31 to bond the CCM units 52 on the first active region 212 aligned therewith, and at the same time, the CCM units 52 being separated from the backing membrane 51. In this way, the CCM strip 5 is pulled until the CCM units 52 are aligned with the first active region 212 of the first frame strip 3 by using the horizontal movement of the pinch roller set 32. Then, the vertical movement of the pinch roller set 32 is used for pressing the CCM strip 5 and the first frame strip 3 against the heating platform 31. Then the pinch roller set 32 rolls in the opposite direction along the heating platform 31 (that is, opposite to the direction of the horizontal movement of the previous pulling of the CCM strip 5), and the backing membrane 51 wound through the pinch roller set 32 is wound up, thereby realizing bonding of the CCM units 52 on the first active region 212 aligned therewith, and realizing separation of the CCM units 52 from the backing membrane 51.

Further, the pinch roller set 32 includes two pinch rollers, and the backing membrane 51 winds through the two pinch rollers in an S-shape, so that the two pinch rollers can pull the CCM strip 5 to move when they are moving in the horizontal direction.

In the above method for manufacturing a membrane electrode, by unwinding and outputting a first frame strip 3 and a CCM strip 5 both passing through the first laminating station to activate a first bonding adhesive layer on the first frame strip 3, making the CCM units be bonded one by one on first active regions 212 of the first frame layer 21, and making the CCM units be separated from the backing membrane 51, thereby realizing the transfer of the CCM units 52 of the CCM strip 5 to first active regions 212 of the first frame layer 21.Comparing with the prior art where the CCM strip and the frame strip are made into sheets and flat-laminated for combining, the present disclosure adopts a roll-to-roll method to realize the transfer of CCM units 52 to the first active region 212 of the first frame layer 21, thereby facilitating improvement of production efficiency and commendably satisfying capacity demands.

It is to be noted that Steps S10 and S20 can be performed simultaneously, i.e., to unwinding and outputting the first frame strip 3 and the CCM strip 5 at the same time. Steps S30 and S40 can also be performed simultaneously (heating and laminating at the same time). Alternatively, Step S30 is performed first, and then step S40 is performed (heating first and then laminating).

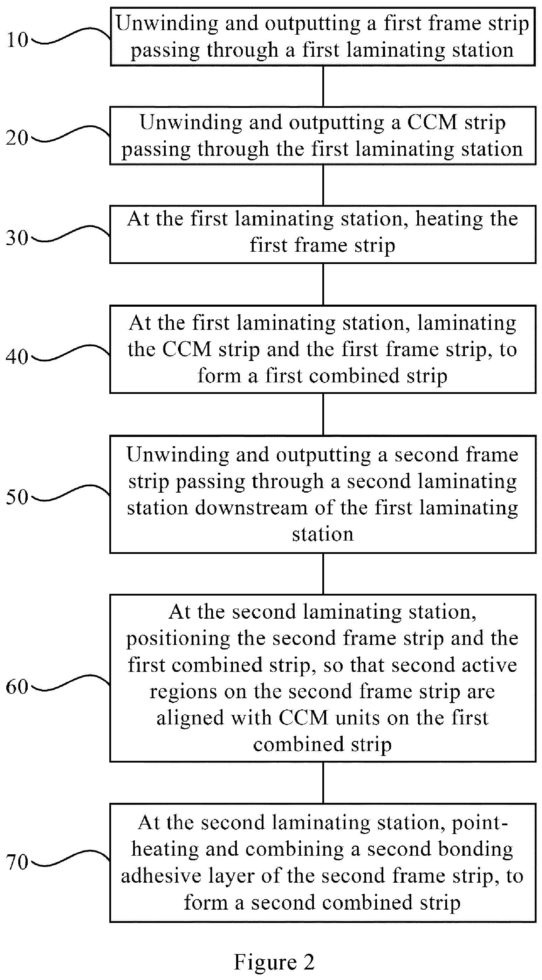

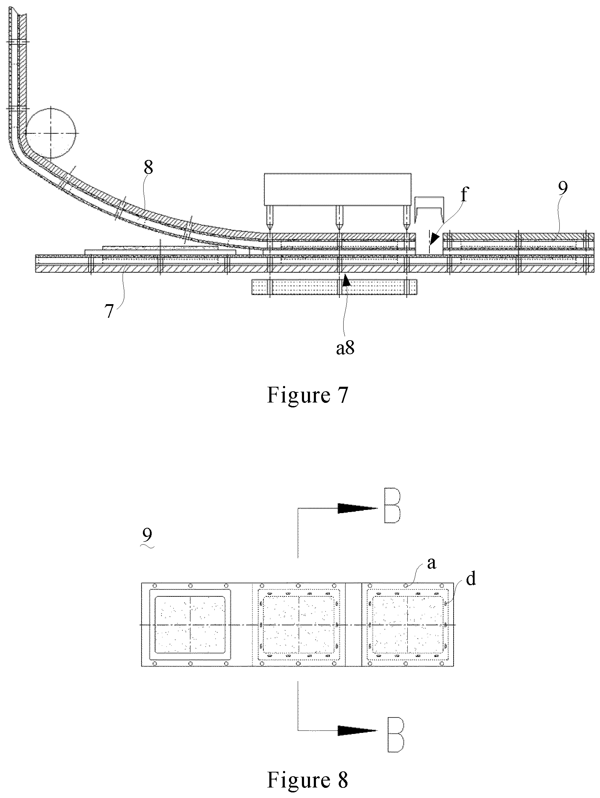

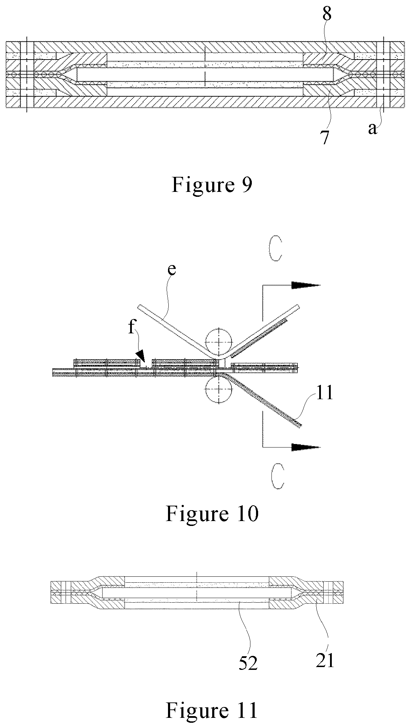

Please refer to Fig. 1, Fig. 2 and shown in Fig. 7, after step S40, the embodiment of the present disclosure may also include the following steps:
S50, unwinding and outputting a second frame strip 8 passing through the second laminating station a8 downstream of the first laminating station a7. Please also refer to FIG. 8 and FIG. 9, wherein the second frame strip 8 includes a second bottom supporting membrane layer and a second frame layer stacked on the second bottom supporting membrane layer. One side of the second frame layer away from the second bottom supporting membrane layer is coated with a second bonding adhesive layer, and the second frame layer has a plurality of second active regions sequentially arranged at intervals along the length direction of the second frame strip 8. Optionally, the membrane layer structure of the second frame strip 8 may be the same as that of the first frame strip 3. The second bonding adhesive layer can be hot melt adhesive.

Further, the second bonding adhesive layer is located on the side of the second frame layer away from the second bottom supporting membrane layer, and can be coated in a way of covering the entire surface. A plurality of second active regions are located in the middle of the second frame layer and are arranged at intervals along the length direction of the second frame strip 8.

S60. At the second laminating station a8, positioning the second frame strip 8 and the first combined strip 7 so that a second active region of the second frame strip 8 is aligned with CCM units on the first combined strip 7.

S70, at the second laminating station a8, point-heating and combining a second bonding adhesive layer of the second frame strip 8, to form a second combined strip 9. In this way, the second active regions of the second frame layer of the second frame strip 8 are combined with the CCM units 52 on the first combined strip 7 in a roll-to-roll manner, which is conducive to improving production efficiency and commendably meet capacity needs. Moreover, the pre-fixation between the second frame strip 8 and the first combined strip 7 is realized by means of point heating, thereby avoiding deviation between the CCM units 52 and the second active regions during subsequent transportation, which is beneficial to improving product quality. Preferably, the heating points d during point heating combining is arranged around the second active region of the second strip 8 (see FIG. 8), so as to facilitate subsequent packaging of the CCM units 52.

Specifically in the embodiment, the first frame strip 3 is provided with a first positioning hole a. The second frame strip 8 is provided with a second positioning hole.

Step S60 specifically includes: inserting the positioning pins correspondingly into the first positioning hole a and the second positioning hole at the second laminating station a8, that is, the positioning pins position the second frame strip 8 and the first combined strip 7, so that the second active regions of the second frame strip 8 is aligned with the CCM units 52 on the first combined strip 7.

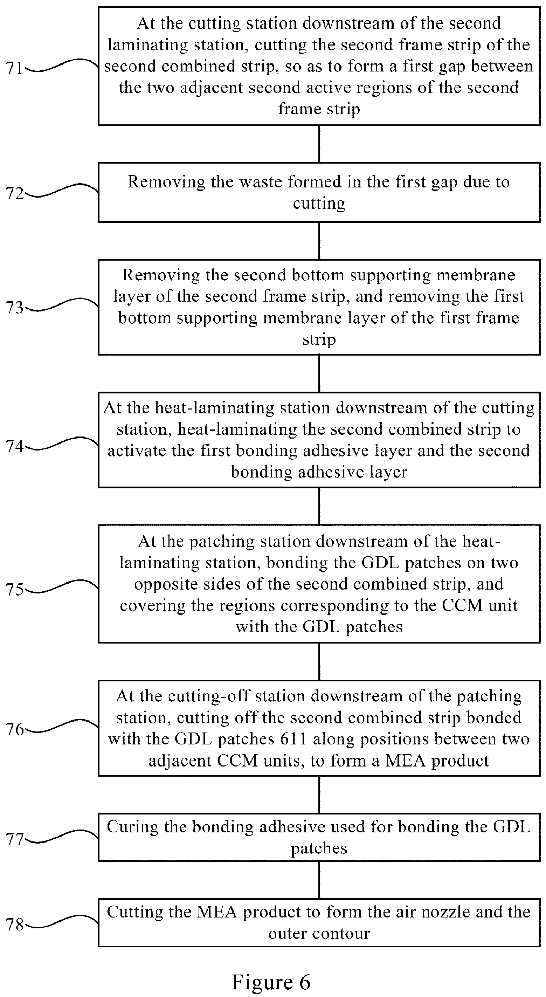

Please refer to Fig. 6 to Fig. 9, after the step S70, the embodiment specifically includes the following steps:
S71, at the cutting station a12 downstream of the second laminating station a8, cutting the second frame strip 8 of the second combined strip 9, so as to form a first gap f between two adjacent active regions of the second frame strip 8.
S72, removing the waste formed in the first gap f due to cutting. Specifically, the waste material in the first gap f of the second frame strip 8 is attached to the waste strip output by unwinding, so as to realize waste disposal. It is to be noted that, waste disposal can of course be performed during cutting, which is not limited here.

In this way, by cutting between the two adjacent second active regions of the second frame strip 8 to form the first gap f, the deformation of the second frame strip 8 can be released, thereby reducing positional error of the active regions of the second frame strip 8 and facilitating improvement of product quality.

Please also refer to FIG. 10. Specifically, after step S72, the embodiment also includes:
S73, removing the second bottom supporting membrane layer of the second frame strip 8, and removing the first bottom supporting membrane layer 11 of the first frame strip 3. More specifically, a waste disposal belt and the second composite strip 9 are unwound and output, both pass between the two paired rollers and are squeezed by the two paired rollers, thereby bonding the second bottom supporting layer (which is discontinuous) of the second frame strip 8. At the same time, the first bottom supporting membrane layer 11 of the first frame strip 3 is connected to the winding device, and the first bottom supporting membrane layer 11 of the first frame strip 3 in the second combined strip 9 passed between the two paired rollers is wound up by the winding device.

Specifically, after step S73, the embodiment also includes the following steps:
S74, at a heat-laminating station a10 (see FIG. 1) downstream of the cutting station a12 (see FIG. 1), heat-laminating the second combined strip 9 to activate the first bonding adhesive layer and the second bonding adhesive layer. In this way, the CCM units 52 are sealed and attached to the first active regions 212 and the second active regions, thereby realizing packaging, that is, to complete the five-in-one process, and to seal the first frame layer 21, the CCM units 52 and the second frame layer, together they forming the second combined strip 9.

Specifically, after step S74, the embodiment further includes the following steps:
S75, at the patching station a13 (see FIG. 1) downstream of the heat-laminating station a10, bonding the GDL patches 611 on two opposite sides of the second combined strip 9, and covering regions corresponding to the CCM units 52 (that is, the first active region and the second active region) with the GDL patches 611. Specifically, when the GDL patches 611 is being bonded, detect the position of the GDL patches 611 via a visual detection unit, so as to improve bonding precision of the GDL patches 611.
S76, at a cutting-off station a14 downstream of the patching station a13, cutting off the second combined strip 9 bonded with the GDL patches 611 along positions between two adjacent CCM units 52, to form a MEA product.

Further, after step S76, the embodiment further includes the following steps:
S77, curing the bonding adhesive used for bonding the GDL patches 611. Specifically, when a pressure-sensitive adhesive is used as the bonding adhesive, the MEA product is laminated by a pressing plate to cure the pressure-sensitive adhesive. When a thermosetting adhesive is used as the bonding adhesive, the MEA product is heat-laminated with a heat-laminating device to cure the thermosetting adhesive.

Further, steps are also included after step S77:
S78, cutting the MEA product to form the air nozzle and the outer contour. Optionally, the MEA product can be cut using a die-cutting process.

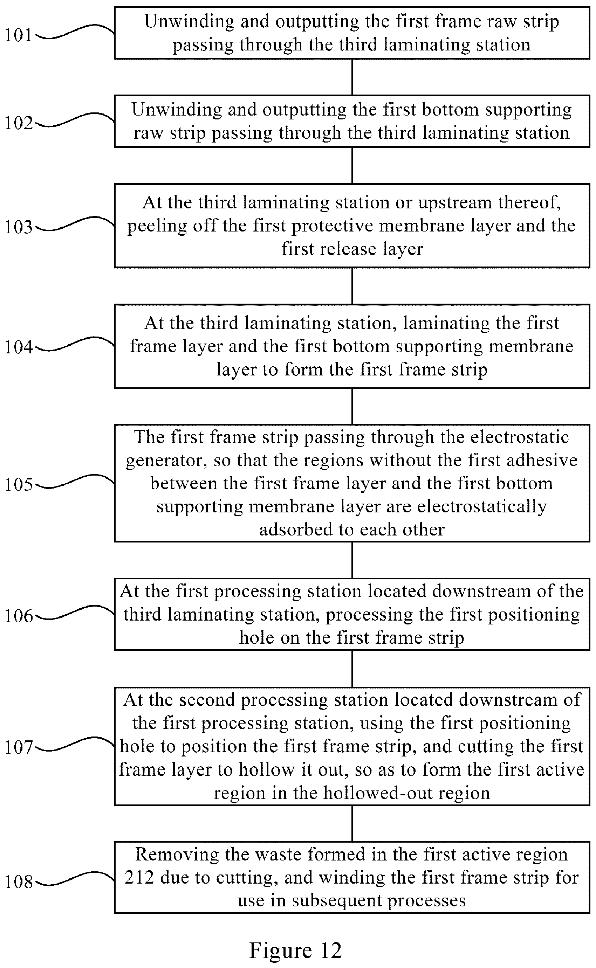

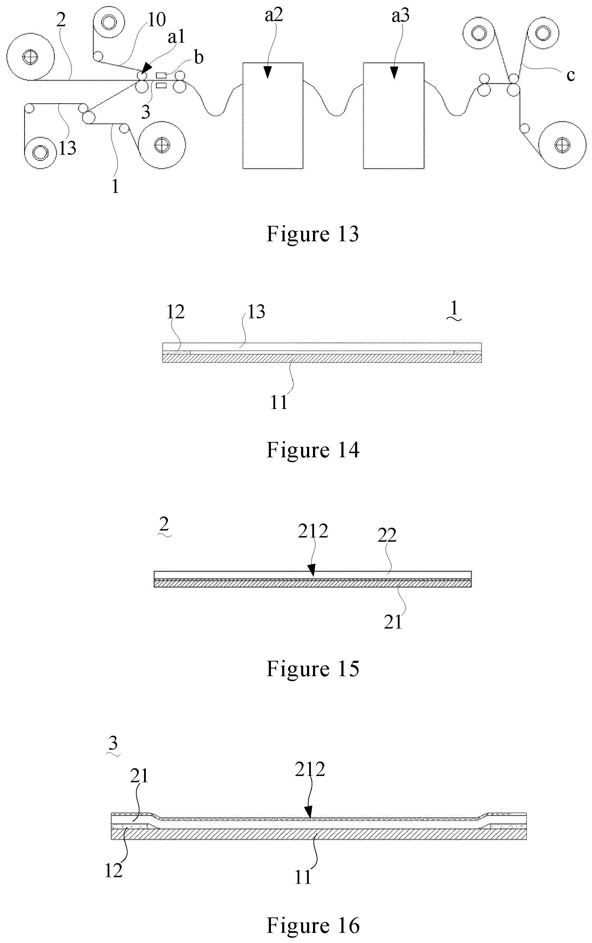

Please refer to Fig. 12 and Fig. 13, before step S10, the embodiment of the present disclosure also include steps:
S101, unwinding and outputting the first frame raw strip 2 passing through the third laminating station a1. Here, the first frame raw strip 2 includes a first frame layer 21 (see FIG. 15) and a first release layer 22 (see FIG. 15), the first release layer 22 being stacked on one side of the first frame layer 21 having the first bonding adhesive layer, and the first release layer 22 is used to protect the first bonding adhesive layer. Optionally, the first frame raw strip 2 may use a high temperature resistant membrane material such as PEN (polyethylene naphthalate).
S102, unwinding and outputting the first bottom supporting raw strip 1 passing through the third laminating station a1. Here, the first bottom supporting raw strip 1 includes a first bottom supporting membrane layer 11 (see FIG. 14) and a first protective membrane layer 13 (see FIG. 14) stacked on one side of the first bottom supporting membrane layer 11, the one side of the first bottom supporting membrane layer 11 facing the first protective membrane layer having a first adhesive 12; Specifically, the first adhesive 12 is located on both sides of the first bottom supporting membrane layer 11 in its width direction, and extends lengthwise along the length direction of the first bottom supporting raw strip 1. Optionally, the first bottom supporting raw strip 1 may be made of insulating and temperature-resistant materials such as PET (polyethylene terephthalate).
S103, at the third laminating station a1 or upstream thereof, peeling off the first protective membrane layer 13 and the first release layer 22.
S104. At the third laminating station a1, laminating the first frame layer 21 and the first bottom supporting membrane layer 11 to form the first frame strip 3 (see FIG. 16 ). Here, the first bottom supporting membrane layer 11 is attached to the side of the first frame layer 21 away from the first bonding adhesive layer through the first adhesive 12. In this way, the first frame raw strip 2 and the first bottom supporting raw strip 1 are combined in a roll-to-roll manner to form the first frame strip 3. Optionally, the first frame layer 21 of the first frame raw strip 2 and the first bottom supporting membrane layer 11 of the first bottom supporting raw strip 1 can be laminated by using two pinch rollers. It is to be noted that step S101 and step S102 may be performed simultaneously.

Further, after step S104, the following steps may be included:
S105, the first frame strip 3 passing through an electrostatic generator b, so that the regions without the first adhesive 12 between the first frame layer 21 and the first bottom supporting membrane layer 11 are electrostatically adsorbed to each other. Specifically, the first adhesive 12 is located on both sides of the first bottom supporting membrane layer 11 in the width direction, so that the two sides of the first frame layer 21 in the width direction are bonded to the first bottom supporting layer 11 by the first adhesive 12, the middle part in the width direction of the first frame layer 21 is electrostatically adsorbed to the first bottom supporting membrane layer 11, so that the entire surface of the first frame layer 21 is attached to the first bottom supporting membrane layer 11.

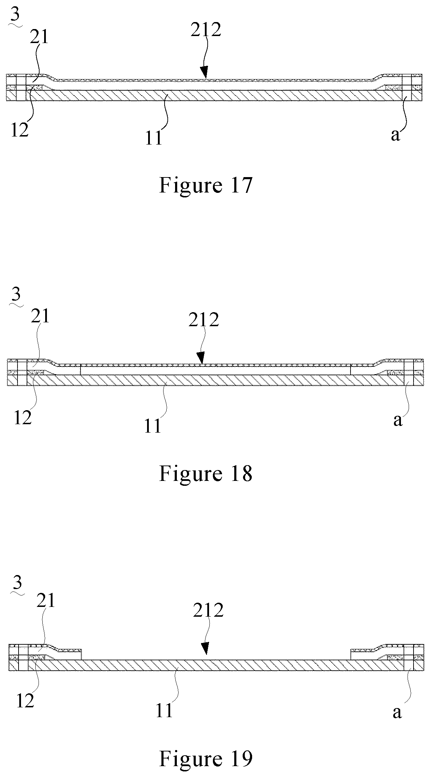

Further, after step S105, the following steps may be included:
S106. At the first processing station a2 located downstream of the third laminating station a1, process the first positioning hole a (see FIG. 17) on the first frame strip 3, so as to facilitate positioning the first frame strip 3 using the first positioning hole a in subsequent processes, which is beneficial to improving process precision and product quality.
S107. At the second processing station a3 located downstream of the first processing station a2, using the first positioning hole a to position the first frame strip 3, and cutting the first frame layer 21 to hollow it out, so as to form the above-mentioned first active region 212 (See Fig.18) in the hollowed-out region. Since in step S105, the regions without the first adhesive 12 between the first frame layer 21 and the first bottom supporting membrane layer 11 are electrostatically adsorbed to each other, therefore, the waste materials formed in the first active region 212 (that is, the hollowed-out area) after cutting are still electrostatically adsorbed on the first bottom supporting membrane layer 11. Moreover, using the first positioning hole a to position the first frame strip 3 is beneficial to improving the cutting precision of the first active region 212 and improving product quality. It is to be noted that, specifically, the first adhesive 12 is located on both sides of the first bottom supporting membrane layer 11 in the width direction, so that two sides of the first frame layer 21 in the width direction are bonded to the first bottom supporting membrane layer 11 by the first adhesive 12, and the middle part in the width direction of the first frame layer 21 is cut to be hollowed out (the first frame layer 21 is not cut-off at this time, and the two sides in the width direction remain continuous), the hollowed-out region is the above-mentioned first active region 212, the waste material formed in the first active region 212 due to cutting continues to be electrostatically adsorbed to the first bottom supporting membrane layer 11.
S108, removing the waste formed in the first active region 212 due to cutting (see FIG. 19), and winding the first frame strip 3 for use in subsequent processes. Specifically, the waste material in the first active region 212 of the first frame strip 3 is removed by using the unwound and output waste strip.

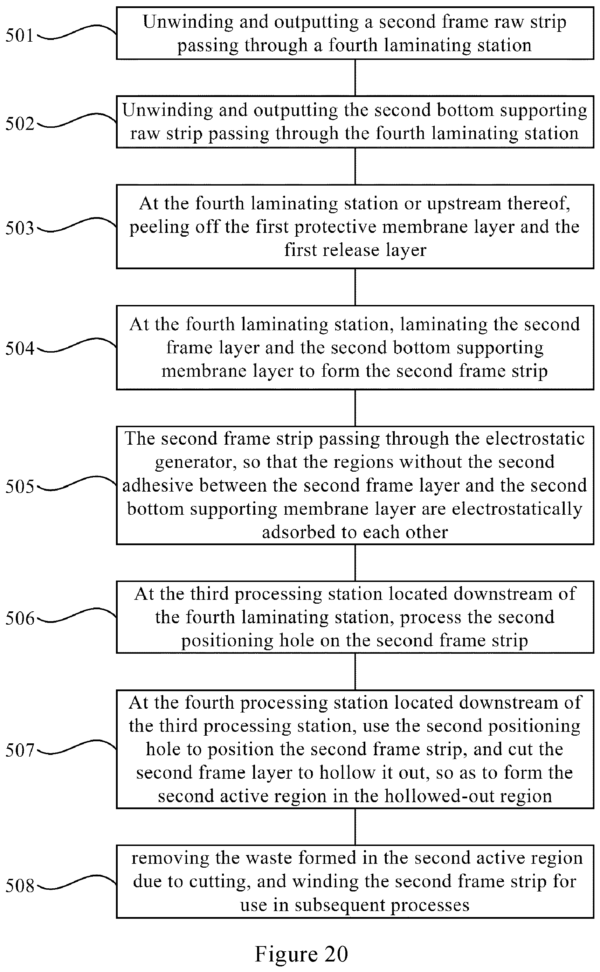

Referring to Fig. 20, in the embodiment of the present disclosure, steps are also included before step S50:
S501, unwinding and outputting a second frame raw strip passing through the fourth laminating station. Here, the second frame raw strip includes a second frame layer and a second release layer, the second release layer is stacked on the side of the second frame layer with the second bonding adhesive layer, and the second release layer is used for protecting the second bonding adhesive layer. Optionally, the second frame raw strip may use high temperature resistant membrane materials such as PEN (polyethylene naphthalate).
S502. Unwinding and outputting a second bottom supporting raw strip passing through the fourth laminating station. Here, the second bottom supporting raw strip includes a second bottom supporting membrane layer and a second protective membrane layer stacked on one side of the second bottom supporting membrane layer, the side of the second bottom supporting membrane layer facing the second protective membrane layer having the second adhesive, and the second protective membrane layer being used for protecting the second adhesive. Specifically, the second adhesive is located on both sides of the second bottom supporting membrane layer in its width direction, and extends lengthwise along the length direction of the second bottom supporting raw strip. Optionally, the second bottom supporting raw strip may use insulating and temperature-resistant materials such as PET (polyethylene terephthalate).
S503, at the fourth laminating station or upstream thereof, peeling off the first protective membrane layer and the first release layer.
S504, at the fourth laminating station, laminating the second frame layer and the second bottom supporting membrane layer to form the second frame strip 8. Here, the second bottom supporting membrane layer is attached to one side of the second frame layer away from the second bonding adhesive layer via the second adhesive. In this way, the second frame raw strip and the second bottom supporting raw strip are combined in a roll-to-roll manner to form the second frame strip 8. Optionally, two pinch rollers may be used to laminate the second frame layer of the second frame raw strip and the second bottom supporting membrane layer of the second bottom supporting raw strip. It is to be noted that Step S501 and Step S502 can be performed simultaneously.

Further, after step S504, the following steps may be included:
S505, the second frame strip 8 passing through the electrostatic generator, so that the regions without the second adhesive between the second frame layer and the second bottom supporting membrane layer are electrostatically adsorbed to each other. Specifically, the second adhesive is located on both sides of the second bottom supporting membrane layer in the width direction, so that the two sides of the second frame layer in the width direction are bonded to the second bottom supporting membrane layer by the second adhesive, and the middle part of the width direction of the second frame layer is electrostatically adsorbed to the second bottom supporting membrane layer, so that the entire surface of the second frame layer is attached to the second bottom supporting membrane layer.

Further, steps are also included after step S505:
S506. At the third processing station located downstream of the fourth laminating station, process the second positioning hole on the second frame strip 8, so that the second positioning hole can be used to performing positioning of the second frame strip 8 in subsequent processes, which is conducive to improving process precision and product quality.
S507. At the fourth processing station located downstream of the third processing station, use the second positioning hole to position the second frame strip 8, and cut the second frame layer to hollow it out, so as to form the above-mentioned second active region in the hollowed-out region. Since in step S505, the area outside the second adhesive between the second frame layer and the second bottom supporting membrane layer are electrostatically adsorbed to each other, the waste formed in the second active region (that is, the hollowed-out region) after cutting is still electrostatically adsorbed on the second bottom supporting membrane layer. Moreover, using the second positioning holes to position the second frame strip 8 is beneficial to improving the cutting precision of the second active region and improving product quality. It is to be noted that, specifically, the second adhesive is located on two sides in the width direction of the second bottom supporting membrane layer, so that the two sides in the width direction of the second frame layer are bonded to the second support by the second adhesive. The middle part in the width direction of the second frame layer is cut to be hollowed out (the second frame layer is not cut off at this time, and the two sides in the width direction remain continuous), and the hollowed-out region is the above-mentioned second active region, the waste material formed by cutting in the second active region continues to be electrostatically adsorbed on the second bottom supporting membrane layer.
S508, removing the waste formed in the second active region due to cutting, and winding the second frame strip 8 for use in subsequent processes. Specifically, the waste material in the second active region of the second frame strip 8 is removed by adhesion of the unwinding output waste strip.

Please refer to Fig. 1, Fig. 21 to Fig. 23, before the Step S20, the embodiment of the present disclosure further includes the following steps:
S201. Unwinding and outputting the pre-processed CCM strip passing through the cutting station a11. Here, the pre-processed CCM strip includes the backing membrane 51 and a CCM layer stacked on one side of the backing membrane 51. Specifically, the CCM layer includes a PEM membrane 521 (i.e., a proton exchange membrane) and catalytic layers 522 on opposite sides of the PEM membrane 521, and the PEM membrane 521 is a continuous membrane material.
S202, at the cutting station, cutting the CCM layer into a plurality of CCM units 52 to form a CCM strip 5. That is, only the CCM layer is cut, and the backing membrane 51 is not cut.

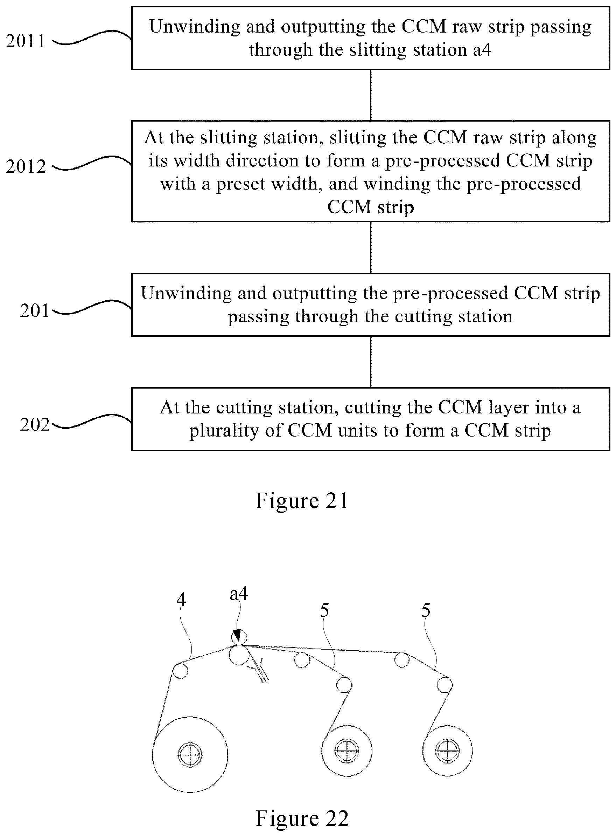

Further, before step S201, the following steps may be included:
S2011, unwinding and outputting the CCM raw strip 4 passing through a slitting station a4 (see Figure 22). Here, the CCM raw strip 4 includes a backing membrane 51 and a CCM layer stacked on the backing membrane. It is to be noted that the membrane layer structure of the CCM raw strip 4 and the pre-processed CCM strip may be the same, except for the different dimensions in the width direction.
S2012. At the slitting station a4, slitting the CCM raw strip 4 along its width direction to form a pre-processed CCM strip with a preset width, and winding the pre-processed CCM strip. In this way, the CCM raw strip 4 is cut into pre-processed CCM strips of preset widths, so that the pre-processed CCM strips can match in width with the first frame strip 3 and the second frame strip 8 in subsequent processes. Optionally, the CCM raw strip 4 can be a zebra-coated CCM strip, which may be multi-row zebra-coated or single-row zebra-coated. Of course, in other embodiments, the CCM raw strip 4 may also be a fully coated strip with CCM strips, which is not limited here.

It is to be noted that, in order to improve production efficiency, the PEM membrane 521 of the CCM layer of the CCM raw strip 4 is coated with at least two rows of catalytic layers 522, and each row of catalytic layers 522 is arranged at intervals along the width direction of the CCM raw strip 4. In step S2012, the CCM raw strip 4 is slitted along its width direction to obtain a plurality of pre-processing CCM strips, and each pre-processing CCM strip has one row of catalytic layer 522 on the PEM membrane 521 of the CCM layer.

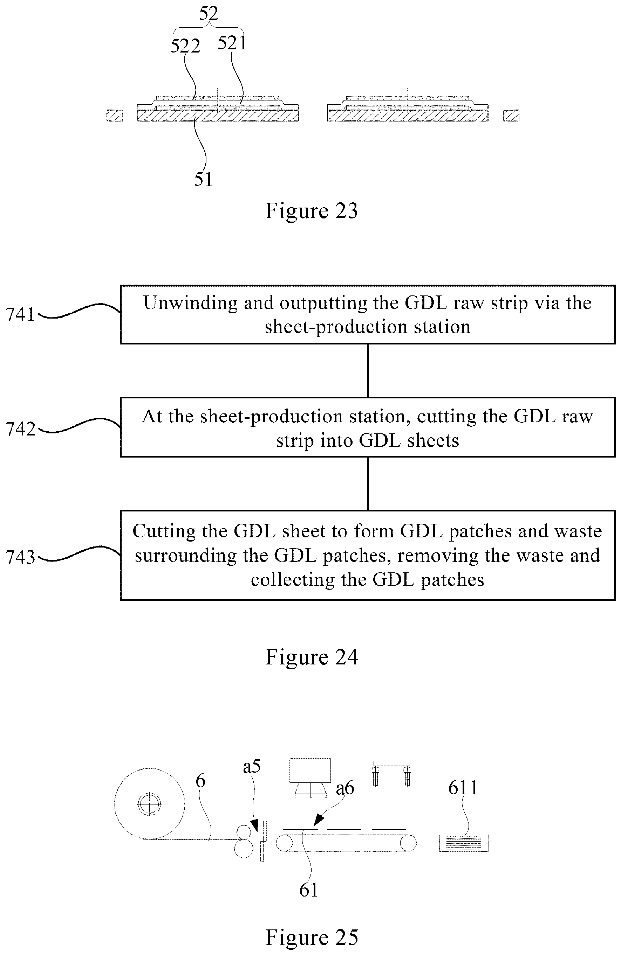

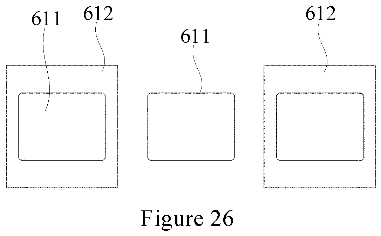

Please refer to Fig. 24 to Fig. 26, in the embodiment of the present disclosure, steps are also included before step S74:
S741, unwinding and outputting the GDL raw strip 6 passing through the sheet-production station a5.

At the sheet-production station, cutting the GDL raw strip 6 into GDL sheets 61. It is to be noted that the GDL raw strip 6 can be cut by using a knife cutting process such as a gate knife or a sliding knife, or by using a laser cutting process, which is not limited here.

S743, cutting the GDL sheet 61 to form GDL patches 611 and waste surrounding the GDL patches 611, removing the waste and collecting the GDL patches 611, and the collected GDL patches 611 is used in step S74. It is to be noted that the GDL sheet 61 may be cut by a knife cutting process such as using a guillotine knife or a sliding knife, or by a laser cutting process, which is not limited herein.

The technical features of the above embodiments can be combined arbitrarily. In order to simplify the description, not all possible combinations of the technical features in the above embodiments are described. However, as long as combinations of these technical features are not contradictory, it should be considered as falling within the scope of this specification.

The above embodiments only illustrate a few embodiments of the invention with specific and detailed description, and are not intended to limit the scope of the invention. The scope of protection of the present invention shall be defined by the appended claims. Any modifications or improvements that fall within the scope of the appended claims are considered part of the invention.

## Claims

1. A method for manufacturing a membrane electrode, comprising:
unwinding and outputting a first frame strip (3) passing through the first laminating station (a7); the first frame strip (3) including a first bottom supporting membrane layer (11) and a first frame layer (21) stacked on the first bottom supporting membrane layer (11), one side of the first frame layer (21) away from the first bottom supporting membrane layer (11) being coated with a first bonding adhesive layer, and the first frame layer (21) having a plurality of first active regions (212) sequentially arranged at intervals along the length direction of the first frame strip (3);
unwinding and outputting a CCM (Catalyst Coated Membrane) strip (5) passing through the first laminating station (a7), the CCM strip (5) including a backing membrane and a plurality of CCM units (52) stacked on the backing membrane, the plurality of CCM units (52) being sequentially arranged at intervals along the length direction of the CCM strip (5);
at the first laminating station (a7), heating the first frame strip (3); and
at the first laminating station (a7), laminating the CCM strip (5) and the first frame strip (3) to form the first combined strip (7), where the CCM units (52) are bonded one by one via a first bonding adhesive layer on the first active regions (212) of the first frame layer (21), and are separated from the backing membrane;
wherein the step "at the first laminating station (a7), laminating the CCM strip (5) and the first frame strip (3) to form the first combined strip (7)" specifically comprises:
the backing membrane of the CCM strip (5) winding through a pinch roller set (32), and the pinch roller set (32) pulling the CCM strip (5) to move until the CCM units (52) are aligned with the first active region (212) of the first frame strip (3);
the pinch roller set (32) pressing the CCM strip (5) and the first frame strip (3) against a heating platform (31); and
the pinch roller set (32) returning along the heating platform (31) to bond the CCM units (52) on the first active region (212), and at the same time, the CCM units (52) being separated from the backing membrane;
wherein, after the step "at the first laminating station (a7), laminating the CCM strip (5) and the first frame strip (3) to form the first combined strip (7)", the method further comprises:
unwinding and outputting a second frame strip (8) passing through the second laminating station (a8) downstream of the first laminating station (a7); the second frame strip (8) including a second bottom supporting membrane layer and a second frame layer stacked on the second bottom supporting membrane layer, one side of the second frame layer away from the second bottom supporting membrane layer being coated with a second bonding adhesive layer, and the second frame layer having a plurality of second active regions sequentially arranged at intervals along the length direction of the second frame strip (8);
at the second laminating station a8, positioning the second frame strip (8) and the first combined strip (7), so that the second active regions on the second frame strip (8) are aligned with the CCM units (52) on the first combined strip (7);
at the second laminating station (a8), point-heating and combining a second bonding adhesive layer of the second frame strip (8), to form a second combined strip (9);
**characterized in that**
after the step "at the second laminating station (a8), point-heating and combining a second bonding adhesive layer of the second frame strip (8), to form a second combined strip (9)", the method further comprises:
at the cutting station downstream of the second laminating station (a8), cutting the second frame strip (8) of the second combined strip (9), so as to form a first gap (f) between two adjacent active regions of the second frame strip (8), and
removing the waste formed in the first gap (f) due to cutting.

2. The method of claim 1 for manufacturing a membrane electrode, the first frame strip (3) is provided with a first positioning hole (a), and the second frame strip (8) is provided with a second positioning hole;
the step "at the second laminating station (a8), positioning the second frame strip (8) and the first combined strip (7), so that the second active regions on the second frame strip (8) are aligned with the CCM units (52) on the first combined strip (7)" comprises:
at the second laminating station (a8), inserting positioning pins correspondingly into the first positioning hole (a) and the second positioning hole.

3. The method of claim 1 for manufacturing a membrane electrode, **characterized in that**, after the step "removing the waste formed in the first gap (f) due to cutting", the method further comprises:
removing the second bottom supporting membrane layer of the second frame strip (8), and removing the first bottom supporting membrane layer (11) of the first frame strip (3).

4. The method of claim 3 for manufacturing a membrane electrode, **characterized in that**, after the step "removing the second bottom supporting membrane layer of the second frame strip (8), and removing the first bottom supporting membrane layer (11) of the first frame strip (3)", the method further comprises:
at a heat-laminating station downstream of the cutting station, heat-laminating the second combined strip (9) to activate the first bonding adhesive layer and the second bonding adhesive layer.

5. The method of claim 4 for manufacturing a membrane electrode, **characterized in that**, after the step "at a heat-laminating station downstream of the cutting station, heat-laminating the second combined strip (9) to activate the first bonding adhesive layer and the second bonding adhesive layer", the method further comprises:
at the patching station (a13) downstream of the heat-laminating station, bonding the GDL patches (611) on two opposite sides of the second combined strip (9), and covering regions corresponding to the CCM units (52) with the GDL patches (611); and
at a cutting-off station downstream of the patching station (a13), cutting off the second combined strip (9) along positions between two adjacent CCM units (52), to form a MEA product.

6. The method of any one of claims 1 to 5 for manufacturing a membrane electrode, **characterized in that**, before the step of "unwinding and outputting a first frame strip (3) passing through the first laminating station (a7)", the method further comprises:
unwinding and outputting the first frame raw strip (2) passing through the third laminating station (a1); wherein the first frame raw strip (2) includes a first frame layer (21) and a first release layer (22), the first release layer (22) being stacked on one side of the first frame layer (21) having the first bonding adhesive layer;
unwinding and outputting the first bottom supporting raw strip (1) passing through the third laminating station (a1), wherein the first bottom supporting raw strip (1) includes a first bottom supporting membrane layer (11) and a first protective membrane layer (13) stacked on one side of the first bottom supporting membrane layer (11), the one side of the first bottom supporting membrane layer (11) facing the first protective membrane layer (13) having a first adhesive (12);
at the third laminating station (a1) or upstream thereof, peeling off the first protective membrane layer (13) and the first release layer (22); and
at the third laminating station (a1), laminating the first frame layer (21) and the first bottom supporting membrane layer (11) to form the first frame strip (3); the first bottom supporting membrane layer (11) being attached to one side of the first frame layer (21) away from the first bonding adhesive layer via the first adhesive (12).

7. The method of claim 6 for manufacturing a membrane electrode, **characterized in that**, after the step "at the third laminating station (a1), laminating the first frame layer (21) and the first bottom supporting membrane layer (11) to form the first frame strip (3)", the method further comprises:
the first frame strip (3) passing through an electrostatic generator (b), so that the regions without the first adhesive (12) between the first frame layer (21) and the first bottom supporting membrane layer (11) are electrostatically adsorbed to each other.

8. The method of claim 7 for manufacturing a membrane electrode, **characterized in that**, after the step "the first frame strip (3) passing through an electrostatic generator (b), so that the regions without the first adhesive (12) between the first frame layer (21) and the first bottom supporting membrane layer (11) are electrostatically adsorbed to each other", the method further comprises:
at the first processing station (a2) located downstream of the third laminating station (a1), process the first positioning hole (a) on the first frame strip (3);
at the second processing station (a3) located downstream of the first processing station (a2), using the first positioning hole (a) to position the first frame strip (3), and cutting the first frame layer (21) to hollow it out, so as to form the above-mentioned first active region (212) in the hollowed-out region; and
removing the waste formed in the first active region (212) due to cutting, and winding the first frame strip (3) for use in subsequent processes.

9. The method of any of claims 1 to 8 for manufacturing a membrane electrode, **characterized in that**, before the step "unwinding and outputting a second frame strip (8) passing through the second laminating station (a8)", the method further comprises
unwinding and outputting a second frame raw strip passing through a fourth laminating station, wherein the second frame raw strip includes a second frame layer and a second release layer, the second release layer being stacked on one side of the second frame layer with the second bonding adhesive layer;
unwinding and outputting a second bottom supporting raw strip passing through the fourth laminating station, wherein the second bottom supporting raw strip includes a second bottom supporting membrane layer and a second protective membrane layer stacked on one side of the second bottom supporting membrane layer having the second adhesive;
at the fourth laminating station or upstream thereof, peeling off the first protective membrane layer and the first release layer; and
at the fourth laminating station, laminating the second frame layer and the second bottom supporting membrane layer to form the second frame strip (8), wherein the second bottom supporting membrane layer is attached to one side of the second frame layer away from the second bonding adhesive layer via the second adhesive.

10. The method of claim 9 for manufacturing a membrane electrode, **characterized in that**, after the step "at the fourth laminating station, laminating the second frame layer and the second bottom supporting membrane layer to form the second frame strip (8)", the method further comprises:
the second frame strip (8) passing through the electrostatic generator (b), so that the regions without the second adhesive between the second frame layer and the second bottom supporting membrane layer are electrostatically adsorbed to each other.

11. The method of claim 10 for manufacturing a membrane electrode, **characterized in that**, after the step "the second frame strip (8) passing through the electrostatic generator (b), so that the regions without the second adhesive between the second frame layer and the second bottom supporting membrane layer are electrostatically adsorbed to each other", the method further comprises:
at the third processing station located downstream of the fourth laminating station, process the second positioning hole on the second frame strip (8);
at the fourth processing station located downstream of the third processing station, use the second positioning hole to position the second frame strip (8), and cut the second frame layer to hollow it out, so as to form the above-mentioned second active region in the hollowed-out region; and
removing the waste formed in the second active region due to cutting, and winding the second frame strip (8).

12. The method of any one of claims 1 to 11 for manufacturing a membrane electrode, **characterized in that**, before the step "unwinding and outputting a CCM strip (5) passing through the first laminating station (a7)", the method further comprises:
unwinding and outputting the pre-processed CCM strip passing through the cutting station, wherein the pre-processed CCM strip includes the backing membrane and a CCM layer stacked on one side of the backing membrane; and
at the cutting station, cutting the CCM layer into a plurality of CCM units (52) to form a CCM strip (5).

13. The method of claim 12 for manufacturing a membrane electrode, **characterized in that**, before the step "unwinding and outputting the pre-processed CCM strip passing through the cutting station", the method further comprises:
unwinding and outputting a CCM raw strip (4) passing through a slitting station; and
at the slitting station, slitting the CCM raw strip (4) along its width direction to form a pre-processed CCM strip with a preset width, and winding the pre-processed CCM strip.

## Patentansprüche

1. Verfahren zur Herstellung einer Membranelektrode, umfassend:
Abwickeln und Ausgeben eines ersten Rahmenbandes (3) durch eine erste Pressstation (a7), wobei das erste Rahmenband (3) eine erste Trägerfolienschicht (11) und eine auf der ersten Trägerfolienschicht (11) geschichtete erste Rahmenschicht (21) umfasst, wobei die erste Rahmenschicht (21) auf ihrer von der ersten Trägerfolienschicht (11) abgewandten Seite mit einer ersten Klebeschicht beschichtet ist, und wobei die erste Rahmenschicht (21) eine Vielzahl von ersten aktiven Bereichen (212) aufweist, wobei die mehreren ersten aktiven Bereiche (212) entlang der Längenrichtung des ersten Rahmenbandes (3) in Abständen aufeinanderfolgend angeordnet sind;
Abwickeln und Ausgeben eines CCM-Bandes (5) (Catalyst Coated Membrane, katalysatorbeschichtete Membran) durch die erste Pressstation (a7), wobei das CCM-Band (5) eine Stützfolie und eine Vielzahl von auf die Stützfolie geschichteten CCM-Einheiten (52) umfasst, wobei die Vielzahl von CCM-Einheiten (52) entlang der Längenrichtung des CCM-Bandes (5) in Abständen aufeinanderfolgend angeordnet ist;
Erwärmen des ersten Rahmenbandes (3) an der ersten Pressstation (a7); und
Pressen und Verbinden des CCM-Bandes (5) mit dem ersten Rahmenband (3) an der ersten Pressstation (a7), um ein erstes Verbundband (7) zu bilden, wobei die CCM-Einheiten (52) durch die erste Klebeschicht einzeln auf die ersten aktiven Bereiche (212) der ersten Rahmenschicht (21) aufgeklebt und von der Stützfolie getrennt werden;
wobei der Schritt "Pressen und Verbinden des CCM-Bandes (5) mit dem ersten Rahmenband (3) an der ersten Pressstation (a7) zur Bildung des ersten Verbundbandes (7)" insbesondere Folgendes umfasst:
Führen der Stützfolie des CCM-Bandes (5) um eine Walzengruppe (32) und Vorziehen des CCM-Bandes (5) durch die Walzengruppe (32), bis die CCM-Einheiten (52) mit den ersten aktiven Bereichen (212) des ersten Rahmenbandes (3) ausgerichtet sind;
Zusammenpressen des CCM-Bandes (5) und des ersten Rahmenbandes (3) auf einer Heizplattform (31) durch die Walzengruppe (32); und
Zurückfahren der Walzengruppe (32) entlang der Heizplattform (31), um die CCM-Einheiten (52) auf die ersten aktiven Bereiche (212) aufzukleben, wobei die CCM-Einheiten (52) gleichzeitig von der Stützfolie getrennt werden,
wobei das Verfahren nach dem Schritt "Pressen und Verbinden des CCM-Bandes (5) mit dem ersten Rahmenband (3) an der ersten Pressstation (a7) zur Bildung des ersten Verbundbandes (7)" ferner Folgendes umfasst:
Abwickeln und Ausgeben eines zweiten Rahmenbandes (8) durch eine stromabwärts der ersten Pressstation (a7) gelegene zweite Pressstation (a8), wobei das zweite Rahmenband (8) eine zweite Trägerfolienschicht und eine auf der zweiten Trägerfolienschicht geschichtete zweite Rahmenschicht umfasst, wobei die zweite Rahmenschicht auf ihrer von der zweiten Trägerfolienschicht abgewandten Seite mit einer zweiten Klebeschicht beschichtet ist, und wobei die zweite Rahmenschicht eine Vielzahl von zweiten aktiven Bereichen aufweist, wobei die mehreren zweiten aktiven Bereiche entlang der Längenrichtung des zweiten Rahmenbandes (8) in Abständen aufeinanderfolgend angeordnet sind;
Positionieren des zweiten Rahmenbandes (8) und des ersten Verbundbandes (7) an der zweiten Pressstation (a8), sodass die zweiten aktiven Bereiche auf dem zweiten Rahmenband (8) mit den CCM-Einheiten (52) auf dem ersten Verbundband (7) ausgerichtet sind;
Punktförmiges Erwärmen und Verbinden der zweiten Klebeschicht des zweiten Rahmenbandes (8) an der zweiten Pressstation (a8), um ein zweites Verbundband (9) zu bilden;
**dadurch gekennzeichnet, dass**
das Verfahren nach dem Schritt "Punktförmiges Erwärmen und Verbinden der zweiten Klebeschicht des zweiten Rahmenbandes (8) an der zweiten Pressstation (a8) zur Bildung des zweiten Verbundbandes (9)" ferner Folgendes umfasst:
Schneiden des zweiten Rahmenbandes (8) des zweiten Verbundbandes (9) an einer stromabwärts der zweiten Pressstation (a8) gelegenen Schneidstation, um zwischen zwei benachbarten aktiven Bereichen des zweiten Rahmenbandes (8) einen ersten Spalt (f) zu bilden, und
Entfernen von durch das Schneiden im ersten Spalt (f) gebildeten Abfällen.

2. Verfahren nach Anspruch 1, wobei das erste Rahmenband (3) ein erstes Positionierloch (a) aufweist und das zweite Rahmenband (8) ein zweites Positionierloch aufweist, und
wobei der Schritt "Positionieren des zweiten Rahmenbandes (8) und des ersten Verbundbandes (7) an der zweiten Pressstation (a8), sodass die zweiten aktiven Bereiche auf dem zweiten Rahmenband (8) mit den CCM-Einheiten (52) auf dem ersten Verbundband (7) ausgerichtet sind" Folgendes umfasst:
Einführen eines Positionierstifts entsprechend in das erste Positionierloch (a) und das zweite Positionierloch an der zweiten Pressstation (a8).

3. Verfahren nach Anspruch 1, **dadurch gekennzeichnet, dass** das Verfahren nach dem Schritt "Entfernen der durch das Schneiden im ersten Spalt (f) gebildeten Abfällen" ferner Folgendes umfasst:
Entfernen der zweiten Trägerfolienschicht des zweiten Rahmenbandes (8) und Entfernen der ersten Trägerfolienschicht (11) des ersten Rahmenbandes (3).

4. Verfahren nach Anspruch 3, **dadurch gekennzeichnet, dass** das Verfahren nach dem Schritt "Entfernen der zweiten Trägerfolienschicht des zweiten Rahmenbandes (8) und Entfernen der ersten Trägerfolienschicht (11) des ersten Rahmenbandes (3)" ferner Folgendes umfasst:
Heißpressen des zweiten Verbundbandes (9) an einer stromabwärts der Schneidstation gelegenen Heißpressstation, um die erste Klebeschicht und die zweite Klebeschicht zu aktivieren.

5. Verfahren nach Anspruch 4, **dadurch gekennzeichnet, dass** das Verfahren nach dem Schritt "Heißpressen des zweiten Verbundbandes (9) an der stromabwärts der Schneidstation gelegenen Heißpressstation, um die erste Klebeschicht und die zweite Klebeschicht zu aktivieren" ferner Folgendes umfasst:
Aufbringen von GDL-Zuschnitten (611) auf beiden gegenüberliegenden Seiten des zweiten Verbundbandes (9) an einer stromabwärts der Heißpressstation gelegenen Bestückungsstation (a13) und Abdecken der den CCM-Einheiten (52) entsprechenden Bereiche mit den GDL-Zuschnitten (611); sowie
Abtrennen des zweiten Verbundbandes (9) an einer stromabwärts der Bestückungsstation (a13) gelegenen Trennstation entlang der Positionen zwischen jeweils zwei benachbarten CCM-Einheiten (52), um MEA-Produkte zu bilden.

6. Verfahren nach einem der Ansprüche 1 bis 5, **dadurch gekennzeichnet, dass** das Verfahren vor dem Schritt "Abwickeln und Ausgeben des ersten Rahmenbandes (3) durch die erste Pressstation (a7)" ferner Folgendes umfasst:
Abwickeln und Ausgeben eines ersten Ausgangs-Rahmenbandes (2) durch eine dritte Pressstation (a1), wobei das erste Ausgangs-Rahmenband (2) eine erste Rahmenschicht (21) und eine erste Trennschicht (22) umfasst, wobei die erste Trennschicht (22) auf einer Seite der ersten Rahmenschicht (21) geschichtet ist, die die erste Klebeschicht aufweist;
Abwickeln und Ausgeben eines ersten Ausgangs-Trägerbandes (1) durch die dritte Pressstation (a1), wobei das erste Ausgangs-Trägerband (1) eine erste Trägerfolienschicht (11) und eine auf einer Seite der ersten Trägerfolienschicht (11) geschichtete erste Schutzfolienschicht (13) umfasst, wobei die erste Trägerfolienschicht (11) auf ihrer der ersten Schutzfolienschicht (13) zugewandten Seite einen ersten Klebstoff (12) aufweist;
Ablösen der ersten Schutzfolienschicht (13) und der ersten Trennschicht (22) an der dritten Pressstation (a1) oder stromaufwärts davon; und
Pressen und Verbinden der ersten Rahmenschicht (21) mit der ersten Trägerfolienschicht (11) an der dritten Pressstation (a1), um das erste Rahmenband (3) zu bilden, wobei die erste Trägerfolienschicht (11) durch den ersten Klebstoff (12) auf der von der ersten Klebeschicht abgewandten Seite der ersten Rahmenschicht (21) angebracht wird.

7. Verfahren nach Anspruch 6, **dadurch gekennzeichnet, dass** das Verfahren nach dem Schritt "Pressen und Verbinden der ersten Rahmenschicht (21) mit der ersten Trägerfolienschicht (11) an der dritten Pressstation (a1) zur Bildung des ersten Rahmenbandes (3)" ferner Folgendes umfasst:
Führen des ersten Rahmenbandes (3) an einem Elektrostatikgenerator (b) vorbei, sodass Bereiche zwischen der ersten Rahmenschicht (21) und der ersten Trägerfolienschicht (11), die keinen ersten Klebstoff (12) aufweisen, einander elektrostatisch angezogen werden.

8. Verfahren nach Anspruch 7, **dadurch gekennzeichnet, dass** das Verfahren nach dem Schritt "Führen des ersten Rahmenbandes (3) an dem Elektrostatikgenerator (b) vorbei, sodass die Bereiche zwischen der ersten Rahmenschicht (21) und der ersten Trägerfolienschicht (11), die keinen ersten Klebstoff (12) aufweisen, einander elektrostatisch angezogen werden" ferner Folgendes umfasst:
Bearbeiten des ersten Positionierlochs (a) in dem ersten Rahmenband (3) an einer stromabwärts der dritten Pressstation (a1) gelegenen ersten Bearbeitungsstation (a2);
Positionieren des ersten Rahmenbandes (3) unter Verwendung des ersten Positionierlochs (a) an einer stromabwärts der ersten Bearbeitungsstation (a2) gelegenen zweiten Bearbeitungsstation (a3) und Schneiden der ersten Rahmenschicht (21), um sie auszuhöhlen, sodass in ausgehöhlten Bereichen die ersten aktiven Bereiche (212) gebildet werden; und
Entfernen von durch das Schneiden in den ersten aktiven Bereichen (212) gebildeten Abfällen und Aufwickeln des ersten Rahmenbandes (3) für die nachfolgenden Verfahrensschritte.

9. Verfahren nach einem der Ansprüche 1 bis 8, **dadurch gekennzeichnet, dass** das Verfahren vor dem Schritt "Abwickeln und Ausgeben des zweiten Rahmenbandes (8) durch die zweite Pressstation (a8)" ferner Folgendes umfasst:
Abwickeln und Ausgeben eines zweiten Ausgangs-Rahmenbandes durch eine vierte Pressstation, wobei das zweite Ausgangs-Rahmenband eine zweite Rahmenschicht und eine zweite Trennschicht umfasst, wobei die zweite Trennschicht auf einer Seite der zweiten Rahmenschicht geschichtet ist, die die zweite Klebeschicht aufweist;
Abwickeln und Ausgeben eines zweiten Ausgangs-Trägerbandes durch die vierte Pressstation, wobei das zweite Ausgangs-Trägerband eine zweite Trägerfolienschicht und eine auf einer den zweiten Klebstoff aufweisenden Seite der zweiten Trägerfolienschicht geschichtete zweite Schutzfolienschicht umfasst;
Ablösen der ersten Schutzfolienschicht und der ersten Trennschicht an der vierten Pressstation oder stromaufwärts davon; und
Pressen und Verbinden der zweiten Rahmenschicht mit der zweiten Trägerfolienschicht an der vierten Pressstation, um das zweite Rahmenband (8) zu bilden, wobei die zweite Trägerfolienschicht durch den zweiten Klebstoff auf der von der zweiten Klebeschicht abgewandten Seite der zweiten Rahmenschicht angebracht wird.

10. Verfahren nach Anspruch 9, **dadurch gekennzeichnet, dass** das Verfahren nach dem Schritt "Pressen und Verbinden der zweiten Rahmenschicht mit der zweiten Trägerfolienschicht an der vierten Pressstation zur Bildung des zweiten Rahmenbandes (8)" ferner Folgendes umfasst:
Führen des zweiten Rahmenbandes (8) an dem Elektrostatikgenerator (b) vorbei, sodass Bereiche zwischen der zweiten Rahmenschicht und der zweiten Trägerfolienschicht, die keinen zweiten Klebstoff aufweisen, einander elektrostatisch angezogen werden.

11. Verfahren nach Anspruch 10, **dadurch gekennzeichnet, dass** das Verfahren nach dem Schritt "Führen des zweiten Rahmenbandes (8) an dem Elektrostatikgenerator (b) vorbei, sodass die Bereiche zwischen der zweiten Rahmenschicht und der zweiten Trägerfolienschicht, die keinen zweiten Klebstoff aufweisen, einander elektrostatisch angezogen werden" ferner Folgendes umfasst:
Bearbeiten des zweiten Positionierlochs in dem zweiten Rahmenband (8) an einer stromabwärts der vierten Pressstation gelegenen dritten Bearbeitungsstation;
Positionieren des zweiten Rahmenbandes (8) unter Verwendung des zweiten Positionierlochs an einer stromabwärts der dritten Bearbeitungsstation gelegenen vierten Bearbeitungsstation und Schneiden der zweiten Rahmenschicht, um sie auszuhöhlen, sodass in ausgehöhlten Bereichen die zweiten aktiven Bereiche gebildet werden; und
Entfernen von durch das Schneiden in den zweiten aktiven Bereichen gebildeten Abfällen und Aufwickeln des zweiten Rahmenbandes (8).

12. Verfahren nach einem der Ansprüche 1 bis 11, **dadurch gekennzeichnet, dass** das Verfahren vor dem Schritt "Abwickeln und Ausgeben des CCM-Bandes (5) durch die erste Pressstation (a7)" ferner Folgendes umfasst:
Abwickeln und Ausgeben eines vorverarbeiteten CCM-Bandes durch eine Schneidstation, wobei das vorverarbeitete CCM-Band die Stützfolie und eine auf einer Seite der Stützfolie geschichtete CCM-Schicht umfasst; und
Schneiden der CCM-Schicht an der Schneidstation in eine Vielzahl von CCM-Einheiten (52), um das CCM-Band (5) zu bilden.

13. Verfahren nach Anspruch 12, **dadurch gekennzeichnet, dass** das Verfahren vor dem Schritt "Abwickeln und Ausgeben des vorverarbeiteten CCM-Bandes durch die Schneidstation" ferner Folgendes umfasst:
Abwickeln und Ausgeben eines CCM-Ausgangsbandes (4) durch eine Längsteilungsstation; und
Längsteilen des CCM-Ausgangsbandes (4) an der Längsteilungsstation entlang seiner Breitenrichtung, um ein vorverarbeitetes CCM-Band mit einer vorbestimmten Breite zu bilden, und Aufwickeln des vorverarbeiteten CCM-Bandes.

## Revendications

1. Procédé de fabrication d'une électrode-membrane, comprenant :
le déroulement et la sortie d'une bande de cadre première (3) passant par un poste de laminage premier (a7) ; ladite bande de cadre première (3) comprenant une couche de membrane de support inférieure première (11) et une couche de cadre première (21) superposée sur la couche de membrane de support inférieure première (11), un côté de la couche de cadre première (21) éloigné de la couche de membrane de support inférieure première (11) étant revêtu d'une première couche adhésive de liaison, et la couche de cadre première (21) comportant une pluralité de zones actives premières (212) disposées à intervalles séquentiels le long de la direction longitudinale de la bande de cadre première (3) ;
le déroulement et la sortie d'une bande CCM (membrane enduite de catalyseur) (5) passant par le poste de laminage premier (a7), la bande CCM (5) comprenant une membrane de support arrière et une pluralité d'unités CCM (52) superposées sur la membrane de support arrière, la pluralité d'unités CCM (52) étant disposées à intervalles séquentiels le long de la direction longitudinale de la bande CCM (5) ;
au poste de laminage premier (a7), le chauffage de la bande de cadre première (3) ; et
au poste de laminage premier (a7), le laminage de la bande CCM (5) et de la bande de cadre première (3) pour former une bande composite première (7), où les unités CCM (52) étant collées une par une sur les zones actives premières (212) de la couche de cadre première (21) par l'intermédiaire de la première couche adhésive de liaison et étant séparées de la membrane de support arrière ;
où l'étape « au poste de laminage premier (a7), le laminage de la bande CCM (5) et de la bande de cadre première (3) pour former une bande composite première (7) » comprend concrètement :
la membrane de support arrière de la bande CCM (5) passe par un ensemble de rouleaux de pincement (32), et l'ensemble de rouleaux de pincement (32) entraîne le déplacement de la bande CCM (5) jusqu'à ce que les unités CCM (52) soient alignées avec les zones actives premières (212) de la bande de cadre première (3) ;
l'ensemble de rouleaux de pincement (32) comprime la bande CCM (5) et la bande de cadre première (3) contre une plate-forme de chauffage (31) ; et
l'ensemble de rouleaux de pincement (32) revient le long de la plate-forme de chauffage (31) pour coller les unités CCM (52) sur les zones actives premières (212), les unités CCM (52) étant simultanément séparées de la membrane de support arrière ;
où, après l'étape « au poste de laminage premier (a7), le laminage de la bande CCM (5) et de la bande de cadre première (3) pour former une bande composite première (7) », le procédé comprend en outre :
le déroulement et la sortie d'une bande de cadre seconde (8) passant par un poste de laminage second (a8) situé en aval du poste de laminage premier (a7) ; la bande de cadre seconde (8) comprenant une couche de membrane de support inférieure seconde et une couche de cadre seconde superposée sur la couche de membrane de support inférieure seconde, un côté de la couche de cadre seconde éloigné de la couche de membrane de support inférieure seconde étant revêtu d'une seconde couche adhésive de liaison, et la couche de cadre seconde comportant une pluralité de zones actives secondes disposées à intervalles séquentiels le long de la direction longitudinale de la bande de cadre seconde (8) ;
au poste de laminage second (a8), le positionnement de la bande de cadre seconde (8) et de la bande composite première (7), de sorte que les zones actives secondes de la bande de cadre seconde (8) soient alignées avec les unités CCM (52) de la bande composite première (7) ;
au poste de laminage second (a8), la réalisation d'un composite par chauffage ponctuel de la seconde couche adhésive de liaison de la bande de cadre seconde (8), pour former une bande composite seconde (9) ;
**caractérisé en ce que**,
après l'étape « au poste de laminage second (a8), la réalisation d'un composite par chauffage ponctuel de la seconde couche adhésive de liaison de la bande de cadre seconde (8), pour former une bande composite seconde (9) », le procédé comprend en outre :
au poste de découpage situé en aval du poste de laminage second (a8), le découpage de la bande de cadre seconde (8) de la bande composite seconde (9), de manière à former un premier espace (f) entre deux zones actives adjacentes de la bande de cadre seconde (8), et
l'élimination des déchets formés dans le premier espace (f) du fait du découpage.

2. Procédé de fabrication d'une électrode-membrane selon la revendication 1, dans lequel la bande de cadre première (3) est pourvue d'un premier trou de positionnement (a), et la bande de cadre seconde (8) est pourvue d'un second trou de positionnement ; l'étape « au poste de laminage second (a8), le positionnement de la bande de cadre seconde (8) et de la bande composite première (7), de sorte que les zones actives secondes de la bande de cadre seconde (8) soient alignées avec les unités CCM (52) de la bande composite première (7) » comprend :
au poste de laminage second (a8), l'insertion de broches de positionnement respectivement dans le premier trou de positionnement (a) et le second trou de positionnement.

3. Procédé de fabrication d'une électrode-membrane selon la revendication 1, **caractérisé en ce qu'**après l'étape « l'élimination des déchets formés dans le premier espace (f) du fait du découpage », le procédé comprend en outre :
l'élimination de la couche de membrane de support inférieure seconde de la bande de cadre seconde (8), et l'élimination de la couche de membrane de support inférieure première (11) de la bande de cadre première (3).

4. Procédé de fabrication d'une électrode-membrane selon la revendication 3, **caractérisé en ce qu'**après l'étape « l'élimination de la couche de membrane de support inférieure seconde de la bande de cadre seconde (8), et l'élimination de la couche de membrane de support inférieure première (11) de la bande de cadre première (3) », le procédé comprend en outre :
au poste de pressage thermique situé en aval du poste de découpage, le pressage thermique de la bande composite seconde (9), pour activer la première couche adhésive de liaison et la seconde couche adhésive de liaison.

5. Procédé de fabrication d'une électrode-membrane selon la revendication 4, **caractérisé en ce qu'**après l'étape « au poste de pressage thermique situé en aval du poste de découpage, le pressage thermique de la bande composite seconde (9), pour activer la première couche adhésive de liaison et la seconde couche adhésive de liaison », le procédé comprend en outre :
au poste de pose de pastilles (a13) situé en aval du poste de pressage thermique, le collage de pastilles GDL (611) sur deux côtés opposés de la bande composite seconde (9), et le recouvrement des zones correspondant aux unités CCM (52) par les pastilles GDL (611) ; et
au poste de sectionnement situé en aval du poste de pose de pastilles (a13), le sectionnement de la bande composite seconde (9) au niveau des emplacements entre deux unités CCM (52) adjacentes, pour obtenir un produit MEA.

6. Procédé de fabrication d'une électrode-membrane selon l'une quelconque des revendications 1 à 5, **caractérisé en ce qu'**avant l'étape « le déroulement et la sortie d'une bande de cadre première (3) passant par un poste de laminage premier (a7) », le procédé comprend en outre :
le déroulement et la sortie d'une bande brute de cadre première (2) passant par un poste de laminage troisième (a1) ; dans lequel la bande brute de cadre première (2) comprend une couche de cadre première (21) et une couche de détachement première (22), la couche de détachement première (22) étant superposée sur le côté de la couche de cadre première (21) qui porte la première couche adhésive de liaison ;
le déroulement et la sortie d'une bande brute de support inférieure première (1) passant par le poste de laminage troisième (a1), dans lequel la bande brute de support inférieure première (1) comprend une couche de membrane de support inférieure première (11) et une couche de membrane de protection première (13) superposée sur un côté de la couche de membrane de support inférieure première (11), le côté de la couche de membrane de support inférieure première (11) orienté vers la couche de membrane de protection première (13) portant un premier adhésif (12) ;
au poste de laminage troisième (a1) ou en amont de celui-ci, le pelage de la couche de membrane de protection première (13) et de la couche de détachement première (22) ; et
au poste de laminage troisième (a1), le laminage de la couche de cadre première (21) et de la couche de membrane de support inférieure première (11) pour former la bande de cadre première (3) ; la couche de membrane de support inférieure première (11) étant collée par le premier adhésif (12) sur le côté de la couche de cadre première (21) éloigné de la première couche adhésive de liaison.

7. Procédé de fabrication d'une électrode-membrane selon la revendication 6, **caractérisé en ce qu'**après l'étape « au poste de laminage troisième (a1), le laminage de la couche de cadre première (21) et de la couche de membrane de support inférieure première (11) pour former la bande de cadre première (3) », le procédé comprend en outre :
le passage de la bande de cadre première (3) à travers un générateur électrostatique (b), de sorte que les zones dépourvues du premier adhésif (12) entre la couche de cadre première (21) et la couche de membrane de support inférieure première (11) soient soumises à une adsorption électrostatique mutuelle.

8. Procédé de fabrication d'une électrode-membrane selon la revendication 7, **caractérisé en ce qu'**après l'étape « le passage de la bande de cadre première (3) à travers un générateur électrostatique (b), de sorte que les zones dépourvues du premier adhésif (12) entre la couche de cadre première (21) et la couche de membrane de support inférieure première (11) soient soumises à une adsorption électrostatique mutuelle », le procédé comprend en outre :
au premier poste d'usinage (a2) situé en aval du poste de laminage troisième (a1), l'usinage du premier trou de positionnement (a) sur la bande de cadre première (3) ;
au second poste d'usinage (a3) situé en aval du premier poste d'usinage (a2), le positionnement de la bande de cadre première (3) au moyen du premier trou de positionnement (a), et le découpage de la couche de cadre première (21) pour la creuser, de manière à former ladite zone active première (212) dans la zone creusée ; et
l'élimination des déchets formés dans la zone active première (212) du fait du découpage, et l'enroulement de la bande de cadre première (3) pour les étapes ultérieures.

9. Procédé de fabrication d'une électrode-membrane selon l'une quelconque des revendications 1 à 8, **caractérisé en ce qu'**avant l'étape « le déroulement et la sortie d'une bande de cadre seconde (8) passant par un poste de laminage second (a8) », le procédé comprend en outre :
le déroulement et la sortie d'une bande brute de cadre seconde passant par un poste de laminage quatrième ; dans lequel la bande brute de cadre seconde comprend une couche de cadre seconde et une couche de détachement seconde, la couche de détachement seconde étant superposée sur le côté de la couche de cadre seconde qui porte la seconde couche adhésive de liaison ;
le déroulement et la sortie d'une bande brute de support inférieure seconde passant par le poste de laminage quatrième, dans lequel la bande brute de support inférieure seconde comprend une couche de membrane de support inférieure seconde et une couche de membrane de protection seconde superposée sur le côté de la couche de membrane de support inférieure seconde portant un second adhésif ;
au poste de laminage quatrième ou en amont de celui-ci, le pelage de la couche de membrane de protection seconde et de la couche de détachement seconde ; et
au poste de laminage quatrième, le laminage de la couche de cadre seconde et de la couche de membrane de support inférieure seconde pour former la bande de cadre seconde (8), dans lequel la couche de membrane de support inférieure seconde est collée par le second adhésif sur le côté de la couche de cadre seconde éloigné de la seconde couche adhésive de liaison.

10. Procédé de fabrication d'une électrode-membrane selon la revendication 9, **caractérisé en ce qu'**après l'étape « au poste de laminage quatrième, le laminage de la couche de cadre seconde et de la couche de membrane de support inférieure seconde pour former la bande de cadre seconde (8) », le procédé comprend en outre :
le passage de la bande de cadre seconde (8) à travers le générateur électrostatique (b), de sorte que les zones dépourvues du second adhésif entre la couche de cadre seconde et la couche de membrane de support inférieure seconde soient soumises à une adsorption électrostatique mutuelle.

11. Procédé de fabrication d'une électrode-membrane selon la revendication 10, **caractérisé en ce qu'**après l'étape « le passage de la bande de cadre seconde (8) à travers le générateur électrostatique (b), de sorte que les zones dépourvues du second adhésif entre la couche de cadre seconde et la couche de membrane de support inférieure seconde soient soumises à une adsorption électrostatique mutuelle », le procédé comprend en outre :
au troisième poste d'usinage situé en aval du poste de laminage quatrième, l'usinage du second trou de positionnement sur la bande de cadre seconde (8) ;
au quatrième poste d'usinage situé en aval du troisième poste d'usinage, le positionnement de la bande de cadre seconde (8) au moyen du second trou de positionnement, et le découpage de la couche de cadre seconde pour la creuser, de manière à former ladite zone active seconde dans la zone creusée ; et
l'élimination des déchets formés dans la zone active seconde du fait du découpage, et l'enroulement de la bande de cadre seconde (8).

12. Procédé de fabrication d'une électrode-membrane selon l'une quelconque des revendications 1 à 11, **caractérisé en ce qu'**avant l'étape « le déroulement et la sortie d'une bande CCM (5) passant par un poste de laminage premier (a7) », le procédé comprend en outre :
le déroulement et la sortie d'une bande CCM pré-traitée passant par un poste de découpage, dans lequel la bande CCM pré-traitée comprend la membrane de support arrière et une couche CCM superposée sur un côté de la membrane de support arrière ; et
au poste de découpage, le découpage de la couche CCM en une pluralité d'unités CCM (52) pour former la bande CCM (5).

13. Procédé de fabrication d'une électrode-membrane selon la revendication 12, **caractérisé en ce qu'**avant l'étape « le déroulement et la sortie d'une bande CCM pré-traitée passant par un poste de découpage », le procédé comprend en outre :
le déroulement et la sortie d'une bande brute CCM (4) passant par un poste de refente ; et
au poste de refente, la refente de la bande brute CCM (4) selon sa direction transversale, pour former une bande CCM pré-traitée de largeur prédéfinie, et l'enroulement de la bande CCM pré-traitée.
